# EUROPEAN PATENT APPLICATION

(11) **EP 4 736 641 A1**
(43) Date of publication of application: **06.05.2026**
(21) Application number: 25212317.9
(22) Date of filing: 30.10.2025
(51) Int. Cl.: A01M 7/00

(54) **APPARATUS FOR SPRAYING CROPS WITH A TREATING COMPOUND**

(30) Priority: 31.10.2024 IT 202400024390
(71) Applicant: Martignani Ing. C. Di Martignani Stefano & C. S.r.l., 48020 Sant'Agata Sul Santerno (RA) (IT)
(72) Inventor: MARTIGNANI, Stefano, 48022 LUGO (RAVENNA) (IT)
(74) Representative: Scipioni, Luca

(57) **Abstract**

An apparatus (1) for spraying crops with a treating compound comprises: a frame (10), including a central skeleton (101); an interface element (IN), in contact with the ground; a tank (2), containing the treating compound; a dispenser assembly (51) spaced, along a transverse direction (T) perpendicular to the advancement direction (A), from the central skeleton (101) and including at least one dispensing nozzle (511), configured to spray the crops with the treating compound; a pressure-head assembly (3), associated with the central skeleton (101) and configured to convey the treating compound from the tank (2) to the dispensing system (5); a dispensing duct (4), which conveys the treating compound from the pressure-head assembly (3) to said dispenser assembly (51); a connecting structure (6), connected to the central skeleton (101) and to the dispenser assembly (51) and movable with respect to the central skeleton (101) between a first operating position (P11), in which the connecting structure (6) reaches a first height along a vertical direction (V), perpendicular to the transverse direction (T) and to the advancement direction (A), and a second operating position (P12), in which the connecting structure (6) reaches a second height along the vertical direction (V), lower than the first height.

## Description

The present invention relates to an apparatus and method for spraying crops with a treating compound.

In the field of apparatuses and methods for spraying crops, the use of apparatuses configured to operate in parallel on a plurality of rows at the same time in a single pass of the apparatus is known.

Besides being fitted, as is customary, with a tank full of treating compound and a pressure-head member to dispense it, said apparatuses are provided with a dispensing system spaced from the central frame of the apparatus.

In particular, solutions are known, comprising a connecting structure, connecting the central frame to a dispenser assembly, transversely spaced to dispense onto the crops of the adjacent row.

Due to the bulky structures and considerably large openings, such apparatuses are, in fact, highly difficult to transport. Furthermore, it is not difficult to encounter situations in which the transit thereof can be obstructed by limited heights.

Furthermore, the current movement systems for moving the dispensing assembly are inefficient, heavy and costly.

It is the object of the present invention to provide an apparatus and method for spraying crops, which overcome the aforesaid problems of the prior art.

Said object is fully achieved by the apparatus and method for spraying crops of the present finding, characterized by the contents of the claims set out below.

According to an aspect of the present description, the present finding provides an apparatus for spraying crops with a treating compound.

The apparatus comprises a frame, including a central skeleton.

The apparatus comprises an interface element, in contact with the ground to allow the apparatus to advance between the crops along an advancement direction.

The apparatus comprises a tank, containing the treating compound.

The apparatus comprises a dispensing system, configured to dispense the treating compound toward the crops. The dispensing system comprises a dispenser assembly. The dispenser assembly is preferably spaced along a transverse direction perpendicular to the advancement direction from the central skeleton. The dispenser assembly comprises at least one dispensing nozzle, configured to spray the crops with the treating compound.

The apparatus comprises a pressure-head assembly. The pressure-head assembly is preferably associated with the central skeleton. The pressure-head assembly is configured to convey the treating compound from the tank to the dispensing system.

The apparatus comprises a dispensing duct, which conveys the treating compound from the pressure-head assembly to said dispenser assembly. The apparatus comprises a connecting structure.

The connecting structure is connected to the central skeleton at a first end thereof. The connecting structure is connected to the dispenser assembly at a second end thereof. Said connecting structure extends in a movement plane, perpendicular to the advancement direction.

Advantageously, said connecting structure is movable with respect to the central skeleton between a first operating position, in which the connecting structure reaches a first height along a vertical direction, perpendicular to the transverse direction and to the advancement direction, and a second operating position, in which the connecting structure reaches a second height along the vertical direction, lower than the first height.

The movement of the movement structure allows the apparatus to be compacted as much as possible, because it allows a simple and effective lowering of the structure so as to reduce the height and allow the apparatus to pass through areas with low obstacles, to be transported easily on standard-sized trucks and containers. Therefore, such aa feature makes the apparatus less bulky, more agile, and easier to transport.

In an embodiment, the connecting structure is rotatable with respect to the central skeleton about a transverse rotation axis, parallel to the transverse direction.

The use of the rotation of the structure allows having a highly agile modality, which is easy to achieve. Furthermore, rotation is the best operating system as it allows the connecting structure to fold at the top of the apparatus (in a plane perpendicular to the vertical direction) reducing the vertical volume to a maximum.

In an embodiment, the central skeleton extends along the vertical direction between a first end, proximal to a supporting surface on which the apparatus is placed, and a second end, opposite to the first end.

The central skeleton comprises a lowering hinge, preferably including a transverse pin.

The connecting structure is connected to the central skeleton at the lowering hinge.

This allows the connecting structure to rotate about the transverse pin, which is, in fact, extended along the transverse direction.

In an embodiment, the apparatus comprises a lowering actuator. The lowering actuator includes a fixed portion, connected to the central skeleton, and a movable portion, removably associated with the fixed portion and connected to the connecting structure.

The movement of the movable portion generates a lowering torque on the connecting structure, which causes the connecting structure to rotate about the lowering hinge.

In an embodiment, the rotation of the connecting structure defines a lowering angle, defined between the movement plane and a vertical plane, perpendicular to the advancement direction. The lowering angle is preferably between -90 degrees and 90 degrees, preferably between 0 and 90 degrees.

For the sake of precision, it is clarified that the lowering angle has a positive sign for foldings of the connecting structure, such that the structure moves downward toward the tank, i.e., it moves in a opposite direction with respect to an advancement direction of the apparatus.

The extension of the lowering angle allows obtaining a highly vertically compact position (at 90, -90 degrees) and a working version, in which the angle is 0 degrees and the dispenser assembly is in use.

In an embodiment, the second end of the connecting structure is movable with respect to the central skeleton between a transport position, in which the second end of the connecting structure is spaced from the central skeleton by a first distance along the transverse direction, and a working position, in which the second end of the connecting structure is spaced from the central skeleton by a second distance along the transverse direction, greater than the first distance.

This embodiment offers a double advantage: transverse compaction of the structure during the transport steps, and adjustment of the distance of the dispenser assembly, to adapt to rows having different widths.

It is specified herein that the transverse mobility of the connecting structure is independent of the mobility about the lowering hinge and the two movements can each be provided individually or in combination. Therefore, it is also the object of the present invention to individually protect the movement between the transport position and the working position, regardless of the movement between the first operating position and the second operating position.

In an embodiment, the connecting structure is rotatable with respect to the central skeleton about an elongation hinge, defining a longitudinal rotation axis, parallel to the advancement direction.

The use of a rotary adjustment system is less heavy and easier to control.

In an embodiment, the connecting structure comprises a first arm, extending between a respective first and second end. The first end of the first arm is connected to the central skeleton.

The connecting structure comprises a second arm, extending between a respective first and second end. The first end of the second arm is removably connected to the second end of the first arm. The second end of the second arm is connected to the dispenser assembly.

Said first and second arms are rotatable with respect to each other about a leveling hinge. Said first and second arms are rotatable with respect to each other about a leveling axis parallel to the advancement direction.

The connecting structure comprises a transfer joint, configured to generate a rotation of the second arm about the leveling hinge, in response to a rotation of the first arm about the elongation hinge.

This type of solution allows important advantages for adjusting the dispenser. In fact, by actuating only the first arm, a motion profile of the dispenser assembly can be obtained, without further actuators. This simplifies and makes the apparatus less expensive with the same performance.

In a particularly advantageous embodiment, the transfer joint is configured to generate a rotation of the second arm with respect to the first arm, which results in a movement of the second end of the second arm along the vertical direction equal to the movement of the second end of the first arm, due to the rotation of the first arm with respect to the central skeleton. Therefore, in practice, this type of transfer allows keeping the vertical position of the dispenser assembly constant while varying the transverse position, despite using a rotary actuation. In fact, therefore, a much slimmer system can be used to obtain what would be obtained with elaborate systems and costly linear actuators.

In an embodiment, the first and second arms are of the same length. Furthermore, the rotation angle defined by the rotation of the second arm about the leveling hinge is preferably equal to the rotation angle defined by the rotation of the first arm about the elongation hinge.

This has proven to be the simplest and most convenient solution for obtaining the aforesaid advantages.

In an embodiment, the dispensing duct is a flexible duct. The dispensing duct is preferably connected to the connecting structure at one or more constraint points.

The use of a flexible duct facilitates the movement of the connecting structure, which is generally more agile.

In an embodiment, the dispenser assembly defines a first dispenser assembly. The first dispenser assembly is transversely spaced from the central skeleton. The first dispenser assembly is arranged on a first transverse side of the central skeleton to spray the crops arranged on said first transverse side.

The dispensing system preferably comprises an additional dispenser assembly, defining a second dispenser assembly. The second dispenser assembly is spaced from the central skeleton along the transverse direction. The second dispenser assembly is arranged on a second transverse side, opposite to the first transverse side.

Said second dispenser assembly includes at least one corresponding dispensing nozzle, configured to spray the crops on the second transverse side with the treating composition.

The connecting structure defines a first connecting structure, which connects the first dispenser assembly to the central skeleton. The apparatus comprises an additional connecting structure, defining a second connecting structure, which connects the second dispenser assembly to the central skeleton.

Said second connecting structure is movable with respect to the central skeleton between a respective first operating position, in which the connecting structure reaches a respective first height along the vertical direction, and a respective second operating position, in which the connecting structure reaches a respective second height along the vertical direction, lower than the corresponding first height.

The use of the second dispenser assembly associated with the respective second connecting structure allows working on four rows simultaneously, while maintaining the aforesaid advantages of compactness.

The first connecting structure is preferably movable in an independent manner from the second connecting structure.

This allows complete adaptability of the apparatus, avoiding unnecessary movements or diversifying the movement based on real needs.

In an embodiment, the dispensing system comprises a central dispenser assembly, aligned, along the advancement direction, with the central skeleton and configured to dispense the treating compound outside the apparatus.

The use of the central dispenser allows working on the side facing the apparatus of the two rows between which the apparatus advances.

In an embodiment, in which the pressure-head member comprises a motor and an impeller rotating about a motor driven compression axis.

In a particularly advantageous embodiment, the apparatus 1 comprising a shielding element. The shielding element is configured to prevent the newly dispensed treating compound from being sucked back in. The shielding element includes a shielding wall, at least partially perpendicular to the advancement direction.

The impeller comprises a suction mouth. The suction mouth faces toward the motor.

The shielding wall is interposed, along the advancement direction, between the dispenser assembly and the suction mouth.

The presence of the shielding wall allows preventing the air sucked in by the impeller from being the air in which the newly dispensed treating compound is dispersed. Thereby, the suction mouth aspirates frontally. Note that the embodiment with the shielding wall can be used regardless of the presence of the transversely and vertically foldable movement structure, because it is structurally and functionally independent therefrom and offers independent advantages.

In a further embodiment, the apparatus comprising a coupling grate. The coupling grate is spaced from the motor, to which it is constrained by means of the coupling grate.

The coupling grate comprises a plurality of holes to allow air to pass from the outside toward the suction mouth of the pressure-head member.

This configuration allows the suction mouth to be oriented in an opposite direction with respect to the direction in which the dispensing nozzles are present, preventing the newly dispensed treating compound from being sucked back in.

According to an aspect of the present description, the present finding provides a method for spraying crops with a treating compound.

The method comprises a step of providing a frame, including a central skeleton.

The method comprises a step of providing an interface element, in contact with the ground to allow the apparatus to advance between the crops along an advancement direction.

The method comprises a step of storing the treating compound in a tank.

The method comprises a step of dispensing the treating compound toward the crops, by means of a dispensing system, comprising a dispenser assembly, spaced, along a transverse direction, perpendicular to the advancement direction, from the central skeleton and including at least one dispensing nozzle, which sprays the crops with the treating compound.

The method comprises a step of conveying the treating compound from the tank to the dispensing system, by means of a pressure-head assembly and a dispensing duct, which conveys the treating compound from the pressure-head assembly to said dispenser assembly.

The method comprises a step of providing a connecting structure, connected to the central skeleton at a first end thereof and to the dispenser assembly at a second end thereof. Said connecting structure extending in a movement plane, perpendicular to the advancement direction.

Advantageously, the method comprises a step of moving said connecting structure with respect to the central skeleton between a first operating position, in which the connecting structure reaches a first height along a vertical direction, perpendicular to the transverse direction and to the advancement direction, and a second operating position, in which the connecting structure reaches a second height along the vertical direction, lower than the first height.

In an embodiment of the method, at the movement step, the connecting structure rotates with respect to the central skeleton about a transverse rotation axis, parallel to the transverse direction.

In an embodiment, the method comprises a step for moving the second end of the connecting structure with respect to the central skeleton between a transport position, in which the second end of the connecting structure is spaced from the central skeleton by a first distance along the transverse direction, and a working position, in which the second end of the connecting structure is spaced from the central skeleton by a second distance along the transverse direction, greater than the first distance.

In an embodiment, at the step of moving the second end of the connecting structure, the connecting structure rotates with respect to the central skeleton about an elongation hinge, defining a longitudinal rotation axis, parallel to the advancement direction.

This and other features will become more apparent from the following description of a preferred embodiment, merely shown by way of nonlimiting example in the appended drawings, in which:

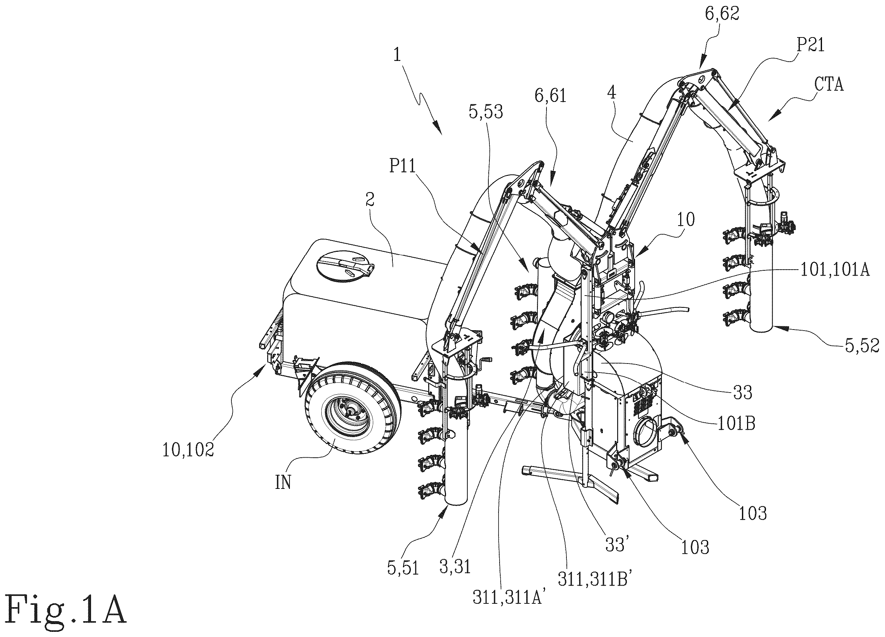

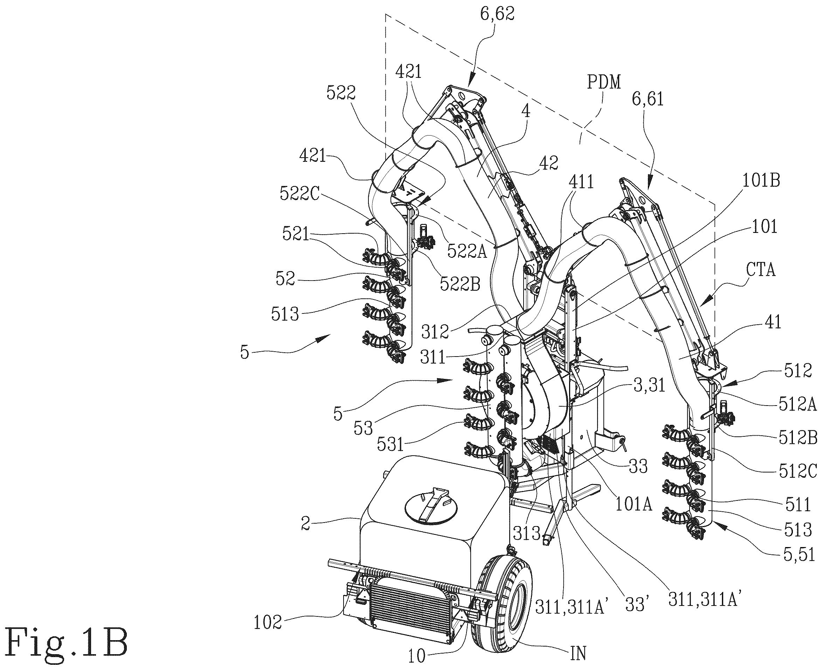

- figures 1A and 1B illustrate a first and a second perspective view of an apparatus for spraying crops according to the present finding;

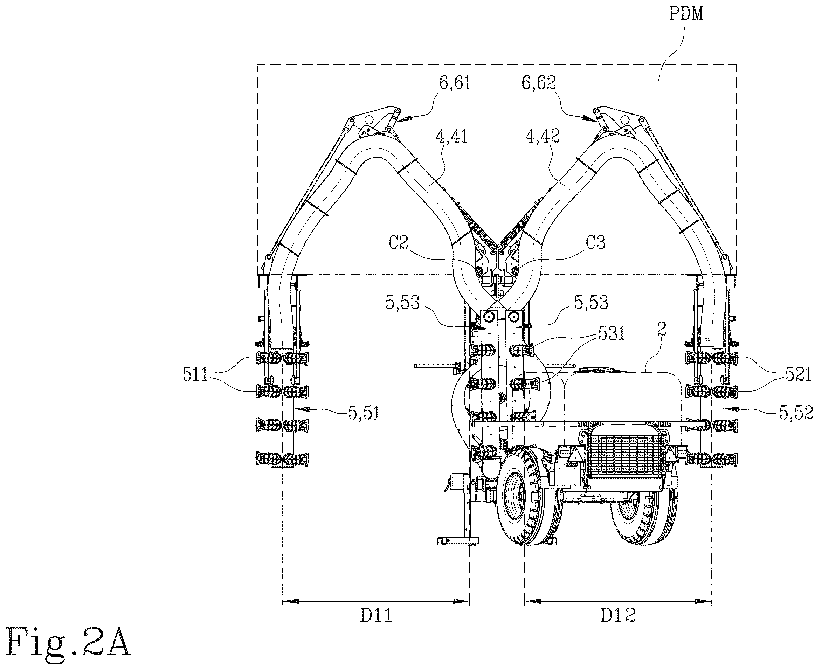

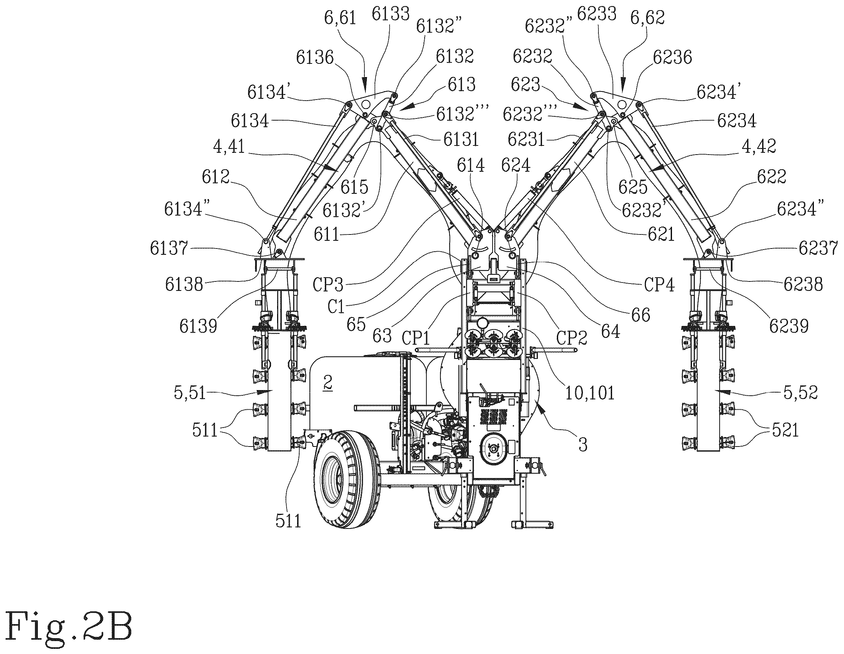

- figures 2A and 2B illustrate a first and a second front view of the apparatus in figure 1A;

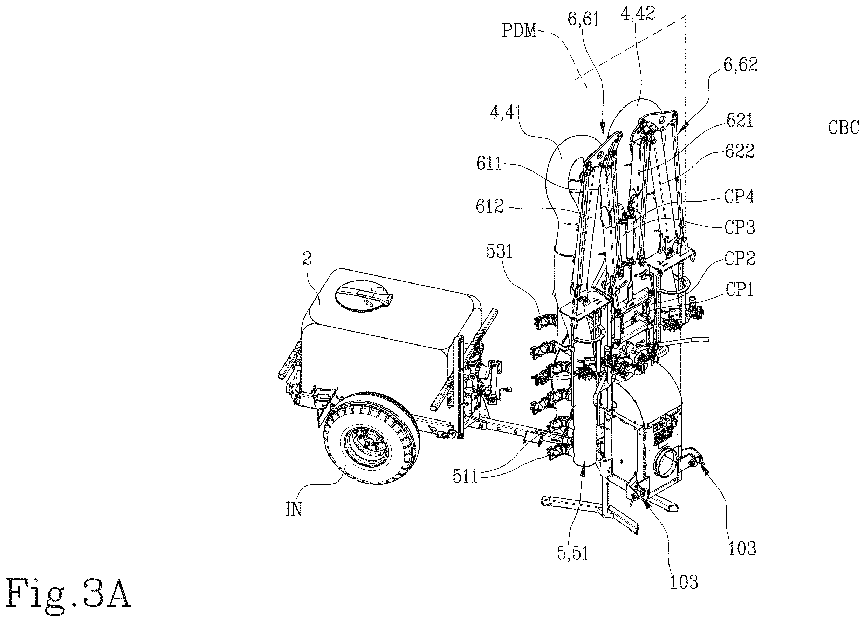

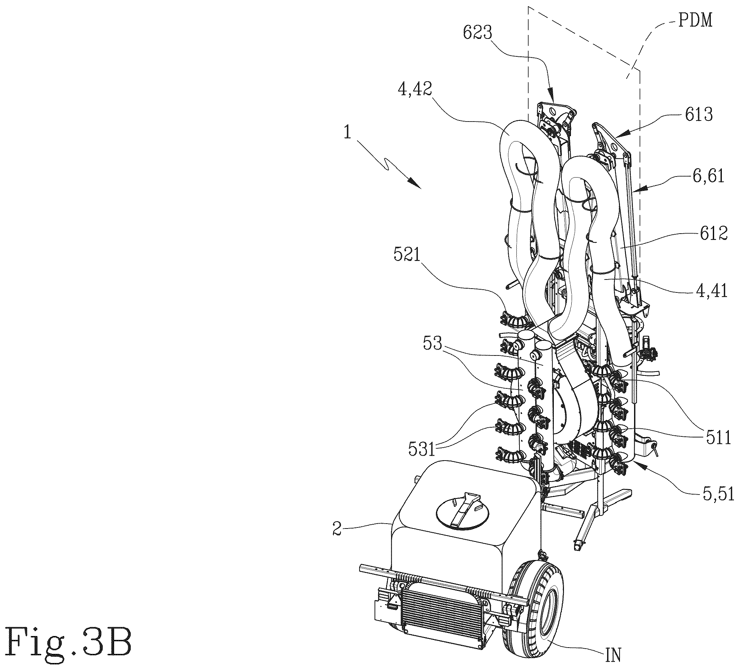

- figures 3A and 3B illustrate a first and a second perspective view of the apparatus in figure 1A in a closed-arm configuration;

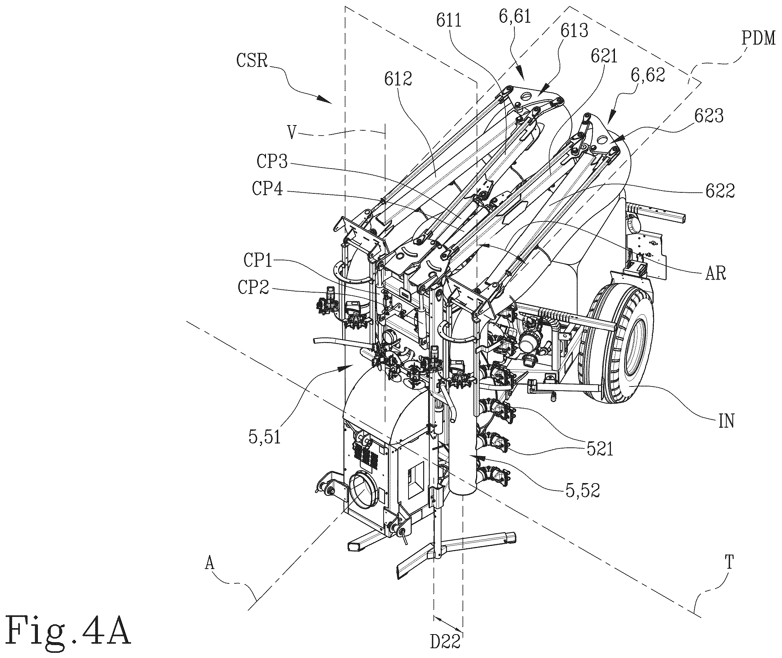

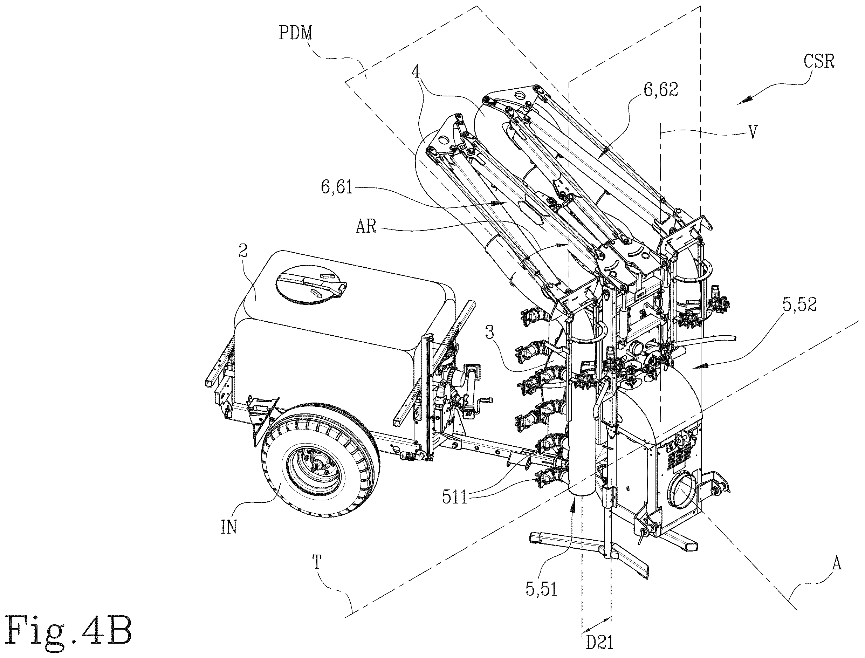

- figures 4A and 4B illustrate a first and a second perspective view of the apparatus in figure 1A in a semi-open configuration;

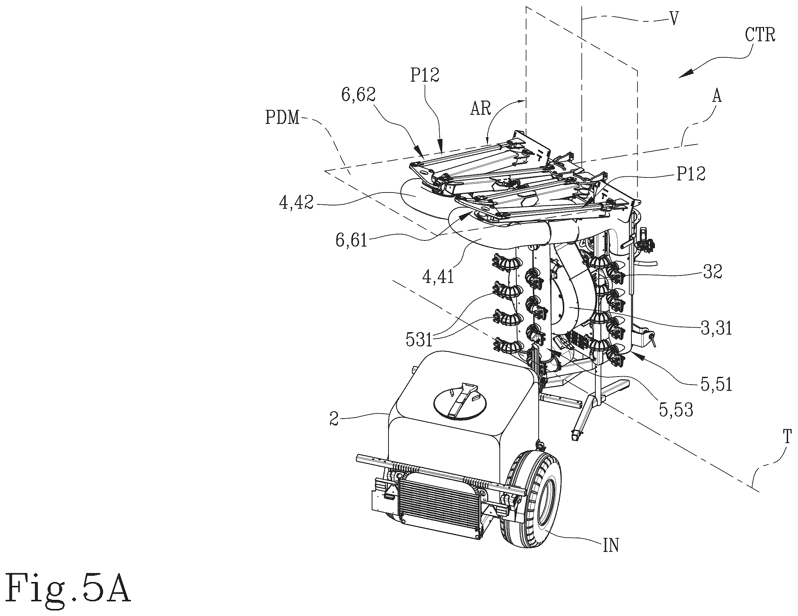

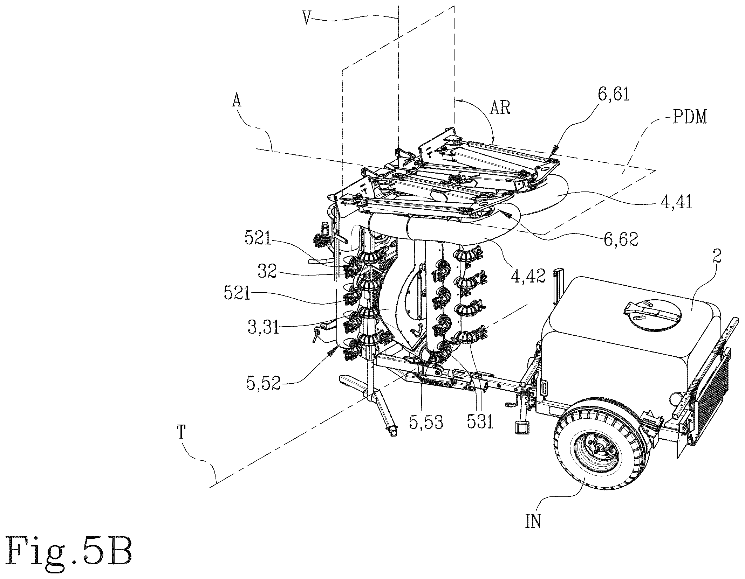

- figures 5A and 5B illustrate a first and a second perspective view of the apparatus in figure 1A in a transport configuration;

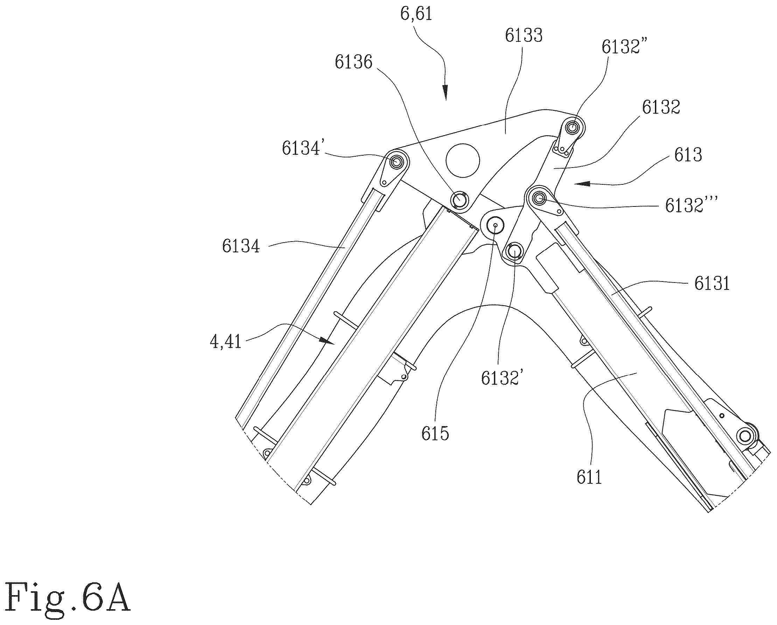

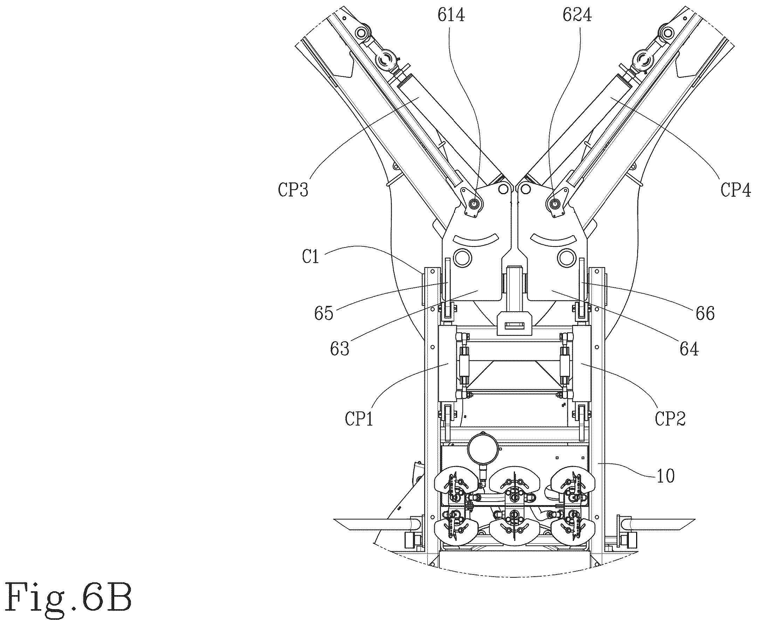

- figures 6A and 6B illustrate a first and a second detailed view of a reference joint and of a part of the connecting structure of the apparatus in figure 1A, respectively;

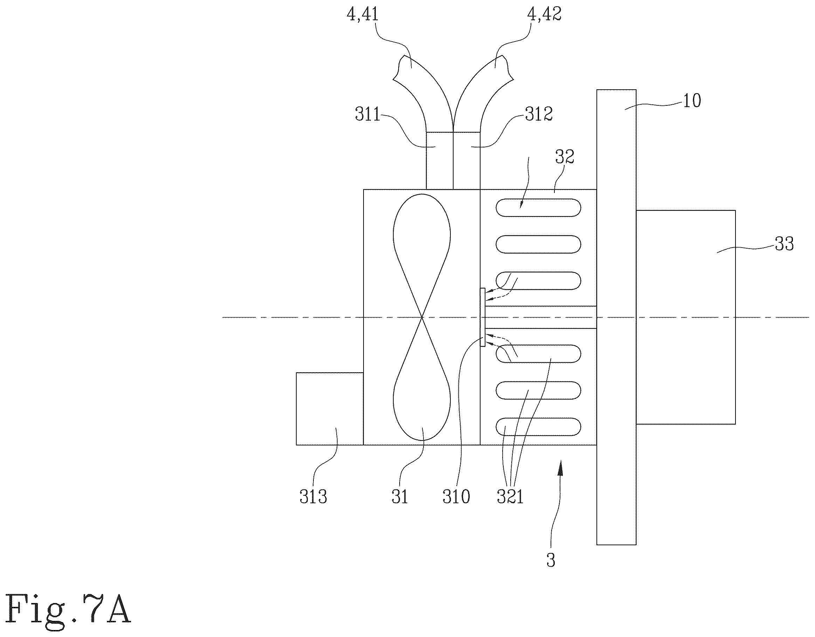

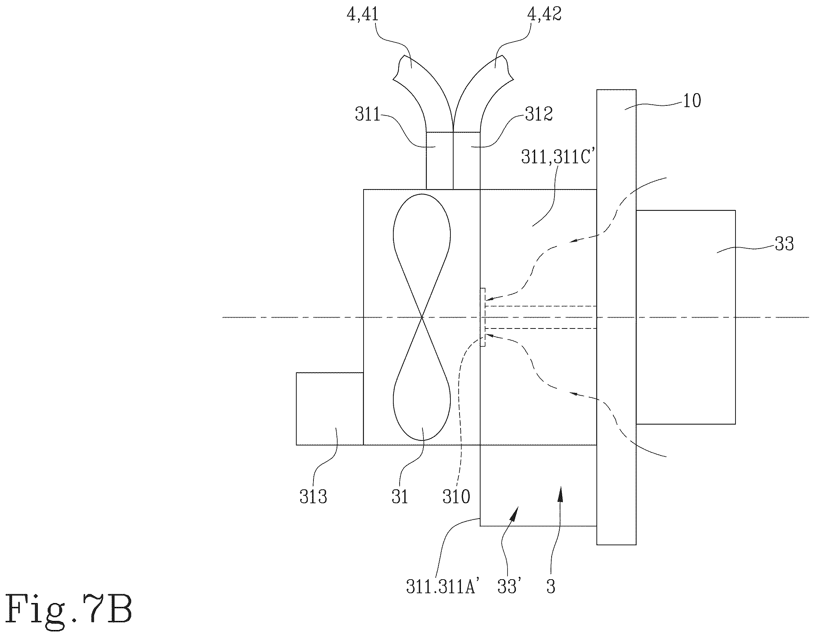

- figures 7A and 7B diagrammatically illustrate a first and a second embodiment of a pressure-head assembly of the apparatus in figure 1A.

With reference to the accompanying figures, an apparatus for spraying crops with a treating compound is denoted by reference numeral 1. The apparatus is configured to advance between two crop rows along an advancement direction A.

The apparatus 1 comprises a frame 10. In an embodiment, the frame 10 comprises a central skeleton 101. The central skeleton 101 extends along a vertical direction V, perpendicular to the advancement direction and substantially parallel to the direction of the weight force, between a first end 101A, proximal to a supporting surface on which the apparatus 1 is arranged, and a second end 101B, opposite to the first end 101A.

The apparatus 1 comprises a tank 2, configured to contain the treating compound.

In an embodiment, the frame 10 comprises a rear carriage 102. The rear carriage 102 is connected to the central skeleton 101. The rear carriage 102 is configured to support the tank 2. The rear carriage 102 is preferably articulated with respect to the central skeleton 101, so as to vary a mutual position by rotation when the apparatus 1 turns.

In an embodiment, the frame 10 comprises a transport attachment 103. The transport attachment 103 is constrained to the central skeleton 101. The transport attachment 103 is arranged on one side of the central skeleton 101, along the advancement direction A, opposite to that in which the rear carriage 102 is connected. The transport attachment 103 is configured to connect to a tractor, which carries the apparatus 1 between the rows.

The apparatus 1 comprises an interface element IN, e.g., a pair of wheels or four wheels.

The apparatus 1 comprises a pressure-head member (assembly) 3, configured to aspirate air and treating compound from the tank 2, and convey them outside. The pressure-head member 3 also comprises significant innovations, which will be described below.

The pressure-head member 3 is connected to the central skeleton 101. The pressure-head member 3 comprises an impeller 31, configured to rotate and transfer a pressure to the fluid passing therethrough.

In a preferred embodiment, the impeller 31 comprises a suction mouth 310 and one or more delivery mouths.

More specifically, the impeller 31 comprises a first delivery mouth 313, oriented along the vertical direction V, in a direction concordant with the direction of the weight force (therefore facing the ground). In an embodiment, the impeller comprises a second delivery mouth 311, oriented along the vertical direction V in an opposite direction with respect to the direction of the weight force.

Finally, according to a particularly advantageous embodiment, the impeller 31 comprises a third delivery mouth 312, oriented along the vertical direction V in an opposite direction with respect to the direction of the weight force, and substantially adjacent to the second delivery mouth 311. The pressure-head member 3 comprises a rotating motor 33 to cause the impeller 31 to rotate.

According to a particularly advantageous embodiment, the motor 33 and the impeller 31 are spaced along the advancement direction A, and are associated with each other only by the drive shaft, which causes the impeller to rotate.

To this end, the pressure-head assembly 3 comprises a coupling grate 32, interposed, along the advancement direction A, between the motor 33 and the impeller 31. The coupling grate 32 comprises a plurality of suction holes 321, which allow air to pass through the coupling grate 32.

Thereby, the suction mouth 310 is oriented along the advancement direction A, in the advancement direction VA. In other words, the suction mouth 310 faces toward the motor and is protected by the coupling grate 32. The air passes through the plurality of suction holes 321 and enters the suction mouth 310.

According to a preferred embodiment, the motor is placed on one side of the central skeleton 101 along the advancement direction A, while the coupling grate 32 and the impeller 31 are placed on the opposite side of the central skeleton 101 along the advancement direction A.

According to a further embodiment, the apparatus 1 comprises a shielding element 33'. The shielding element 33' is arranged between the suction mouth 310 and the first dispenser assembly 51 and/or the second dispenser assembly 52, along the advancement direction A.

The shielding element 33' comprises a shielding wall 311', at least partially perpendicular to the advancement direction A.

The shielding wall 311' preferably comprises a central portion 311A', perpendicular to the advancement direction A, a first side portion 311B', inclined with respect to the advancement direction A and arranged on a first transverse side of the central portion 311A', and a second side portion 311C', inclined with respect to the advancement direction A and connected to the opposite transverse side of the central portion 311A' with respect to the side where the first side portion 311B' is connected.

The first and second side portions 311B', 311C' converge in a direction oriented from the suction mouth toward the first and/or second dispenser 51, 52, along the advancement direction A. This contributes to acting as a conveyor of clean air toward the suction mouth 310, covering, as much as possible, the backflow of the treating compound.

The first and second side portions 311B', 311C' are preferably perpendicular to the transverse direction T.

In an embodiment, the first and second side portions 311B', 311C' are coupled to the central skeleton 101.

Furthermore, the central portion 311A' is constrained to the face of the impeller 33 oriented toward the motor, i.e., toward the central skeleton 101.

The apparatus 1 comprises a dispensing system 5 configured to receive the treating compound mixed with the air from the pressure-head member 3 and dispense it to the outside.

According to a preferred embodiment, the dispensing system 5 comprises a first dispenser assembly 51. The dispensing system comprises a second dispenser assembly 52. The dispensing system 5 comprises a central dispenser 53.

Each of said first and second dispensing assemblies 51, 52 comprises a respective plurality of dispensing nozzles 511, 521, spaced from each other along the vertical direction. Furthermore, each plurality of dispensing nozzles 511, 521 is also divided into two assemblies: a first assembly, configured to dispense the treating compound along a transverse direction T (perpendicular to the advancement direction A and to the vertical direction V) in a first dispensing direction, and a second assembly, configured to dispense the treating compound along the transverse direction T in a second dispensing direction, opposite to the first dispensing direction.

In an embodiment, each of said first and second dispensing assemblies 51, 52 comprises a respective first and second cage 512, 522.

In an embodiment, each of said first and second dispensing assemblies 51, 52 comprises a respective first rigid duct 513 and second rigid duct 523, each connected to the first section 41 of the dispensing duct 4 and to the second section 42 of the dispensing duct 4, respectively.

Each of said first and second cages 512, 522 comprises a respective pair of rods 512 C, extending along the vertical direction V on opposite sides of the first and second rigid ducts 513, 523, respectively.

Each of said first and second cages 512, 522 comprises a respective first circular crown 512A, surrounding, at least in part, the respective first and second rigid ducts 513, 523, respectively.

Each of said first and second cages 512, 522 comprises a respective second circular crown 512B, surrounding, at least in part, the respective first and second rigid ducts 513, 523, respectively.

The first and second circular crowns 512A, 512B are connected to the pair of rods 512C in spaced positions from each other along the vertical direction V.

The first and second rigid ducts 513, 523 are constrained to the respective first and second cages 512, 522.

The central dispenser 53 comprises a respective plurality of dispensing nozzles 531, spaced from one another along the vertical direction V. Furthermore, according to a preferred embodiment, the plurality of dispensing nozzles 531 of the central dispenser is divided into two assemblies: a first assembly, configured to dispense the treating compound along the transverse direction T in the first dispensing direction, and a second assembly, configured to dispense the treating compound along the transverse direction T in the second dispensing direction.

With this configuration it is possible to treat six sides of the rows, the two facing the apparatus 1 (with the first and second groups of dispensing nozzles 531 of the central dispenser 53), the two facing the right side corridor (with the first and second groups of dispensing nozzles 511 of the first dispenser assembly 51) and the two facing the left side corridor (with the first and second groups of dispensing nozzles 521 of the second dispenser 52).

The apparatus 1 comprises a dispensing duct 4, connected to the pressure-head member 3 and to the dispensing system 5 for conveying the treating compound therein.

In particular, the dispensing duct 4 is connected to the second delivery mouth 311 and/or to the third delivery mouth 312, to convey the treatment compound from the pressure-head member 3 to the first and second dispensing assemblies 51 and 52.

The dispensing duct 4 preferably comprises a first section 41, connected to the second delivery mouth 311 and to the first dispenser assembly 51. The dispensing duct 4 comprises a second section 42, connected to the third delivery mouth 312 and to the second dispensing assembly 52.

The dispensing duct 4 is a flexible duct, for example, but not limited thereto, made of flexible plastic, resistant to the treating compound.

Advantageously, the apparatus 1 comprises a connecting structure 6, configured to connect the dispensing system 5 to the central skeleton 101. The first section 41 of the dispensing duct 4 and the second section 42 of the dispensing duct 4 are connected to the connecting structure 6 by means of a first group of constraints 411 and a second group of constraints 421, respectively.

The connecting structure 6 plays a key role for the purposes of the present invention because it includes different features which, individually or combined, allow different technical advantages, which make the apparatus more efficient, compact and transportable.

In a preferred embodiment, the apparatus comprises a first connecting structure 61. The apparatus comprises a second connecting structure 62. The first connecting structure 61 is connected to the central skeleton 101. The first connecting structure 61 is connected to the first dispensing assembly 51.

The second connecting structure 62 is connected to the central skeleton 101. The second connecting structure 62 is connected to the second dispensing assembly 52.

In an embodiment, the first connecting structure 61 is movable between a first operating position P11, in which it reaches a first height along the vertical direction V, and a respective second operating position P12, in which it reaches a second height along the vertical direction V, lower than the first height. The first connecting structure 61 is preferably movable between the first and second operating positions P11, P12 by rotation about a lowering hinge C1.

In an embodiment, the first connecting structure 61 is movable between a working position PL1, in which the first dispenser assembly 51 is spaced from the central skeleton 101, along the transverse direction T, by a first distance D11, and a transport position PT1, in which the first dispenser assembly 51 is spaced from the central skeleton 101, along the transverse direction T, by a second distance D21, smaller than the first distance D11.

In an embodiment, the second connecting structure 62 is movable between a respective first operating position P21, in which it reaches a respective first height along the vertical direction V, and a respective second operating position P22, in which it reaches a respective second height along the vertical direction V, lower than the first height. The second connecting structure 61 is preferably movable between the respective first and second operating positions P21, P22 by rotation about the lowering hinge C1.

In an embodiment, the second connecting structure 61 is movable between a respective working position PL2, in which the second dispenser assembly 52 is spaced from the central skeleton 101, along the transverse direction T, by a first distance D12, and a respective transport position PT2, in which the second dispenser assembly 52 is spaced from the central skeleton 101, along the transverse direction T, by a second distance D22, smaller than the first distance D11.

The combination between the positions listed above for each of said first and second connecting structures 61, 62 results in different operating configurations of the apparatus 1, which will be reported below.

Before discussing the merits, however, it is important to observe that, according to an embodiment, the first and second connecting structures 61, 62 are independently movable with respect to each other and can therefore take different positions in the same time instant.

To this end, the apparatus 1 comprises respective actuators, which are used for such movements.

More specifically, the apparatus 1 comprises a first actuator CP1. The first actuator CP1 is preferably a cylinder-piston assembly CP1, where the cylinder is connected to the central skeleton 101 and the piston is connected to the first connecting structure 61. The movement of the first actuator CP1 causes the first connecting structure 61 to move between the respective first operating position P11 and the second operating position P12.

The apparatus comprises a second actuator CP2. The second actuator CP2 is preferably a cylinder-piston assembly CP2 where the cylinder is connected to the central skeleton 101 and the piston is connected to the second connecting structure 62. The movement of the second actuator CP2 causes the second connecting structure 62 to move between the respective first operating position P21 and the second operating position P22.

The apparatus 1 comprises a third actuator CP3. The third actuator CP3 is preferably a cylinder-piston assembly CP3, where the cylinder is connected to a part of the first connecting structure 61, which moves under the action of the first actuator CP1, and where the piston is connected to a part of the first connecting structure, constrained to the first dispensing assembly 51. The movement of the third actuator CP3 causes the first connecting structure 61 to move between the respective working position PL1 and the respective transport position PT1.

The apparatus 1 comprises a fourth actuator CP4. The fourth actuator CP4 is preferably a cylinder-piston assembly CP4, where the cylinder is connected to a part of the second connecting structure 62 which moves under the action of the second actuator CP2, and where the piston is connected to a part of the second connecting structure 62, constrained to the second dispensing assembly 52. The movement of the fourth actuator CP4 causes the second connecting structure 62 to move between the respective working position PL2 and the respective transport position PT2. The apparatus 1 is positionable in a fully open configuration CTA, in which the first connecting structure 61 and the second connecting structure 62 are in the working position PL1, PL2 and in the first operating position P11, P21.

The apparatus 1 is positionable in an obstacle-clearing configuration, in which the first connecting structure 61 and the second connecting structure 62 are in the working position PL1, PL2 and, with respect to rotation about the lowering hinge C1, they are in a position between the first operating position P11, P21 and the second operating position P12, P22, so as to reduce the vertical height of the apparatus.

The apparatus 1 is positionable in a closed-arm configuration CBC, in which the first connecting structure 61 and the second connecting structure 62 are in the transport position PT1, PT2 and in the first operating position P11, P21.

The apparatus 1 is positionable in a semi-closed configuration CSR, in which the first connecting structure 61 and the second connecting structure 62 are in the transport position PT1, PT2 and, with respect to the rotation about the lowering hinge C1, they are in a position between the first operating position P11, P21 and the second operating position P12, P22, so as to reduce the vertical height of the apparatus.

The apparatus 1 is positionable in a transport configuration CTR, in which the first connecting structure 61 and the second connecting structure 62 are in the transport position PT1, PT2 and in the second operating position P12, P22.

Discussing the merits of connecting structures 61, 62, we can observe the following.

The first connecting structure 61 comprises a first connecting plate 63. The first connecting plate 63 is hinged in the lowering hinge C1 on the central skeleton 101. The first connecting plate 63 comprises a first fin 65, which rises from the first connecting plate 63. The first fin 65 is hinged to the piston of the first actuator CP1. Thereby, the sliding of the piston of the first actuator CP1 results in a corresponding rotation of the first fin 65, which thus results in the rotation of the first connecting plate 63.

The first connecting plate 63 comprises a respective elongation hinge 614. The first connecting structure 61 comprises a respective first arm 611, connected to the first connecting plate 63 at the corresponding elongation hinge 614.

The first connecting structure 61 comprises a respective second arm 612, removably connected to the corresponding first arm 611 at a respective leveling hinge 615.

In fact, the second arm 612 rotates about the leveling hinge 615 with respect to the first arm 611.

The second arm 612 comprises a first idle pin 6137, extending along a direction parallel to the advancement direction A. The first connecting structure 61 comprises a first dispensing plate 6138.

The first dispensing plate 6138 is connected to the second arm 612 by means of the first idle pin 6137 so as to remain perpendicular to the vertical direction V when the second arm 612 moves.

The first dispensing plate 6138 comprises a first dispensing pin 6139, arranged on a surface of the first dispensing plate 6138 facing the ground. The first dispensing pin 6139 extends along the transverse direction T. The first dispensing pin 6139 engages with the first cage 512 of the first dispenser assembly 51. The first dispensing pin 6139 allows an idle rotation of the first cage 512.

Thereby, when the first connecting structure 61 is lowered, the first dispenser assembly 51 nonetheless remains parallel to the vertical direction V, without affecting the effectiveness of the spraying operations.

According to a particularly advantageous embodiment, the movement of the first connecting structure 61 between the working position PL1 and the transport position PT1 occurs keeping the vertical height of the first dispensing assembly 51 constant.

In order to obtain such a technical advantage, the first connecting structure 61 comprises a first transfer joint 613. The first transfer joint 613 is configured to transfer a rotation of the first arm 611 into a corresponding rotation of the second arm 612, so that the vertical height of the first dispensing assembly 51 remains constant.

The first transfer joint 613 comprises a respective first transfer arm 6131.

The first transfer joint 613 comprises a respective transfer lever 6132. The transfer lever 6132 comprises a fulcrum 6132', a first hinge 6132", and a second hinge 6132"'. The fulcrum 6132' is arranged at a first end of the transfer lever 6132. The first hinge 6132" is arranged at a second end of the transfer lever 6132, opposite to the first end. The second hinge 6312‴ is arranged between the fulcrum 6132' and the first hinge 6132"'.

The first transfer arm 6131 is connected to the first connecting plate 63 by means of a respective hinge, which allows the relative rotation thereof. The first transfer arm 6131 is connected to the transfer lever 6132 at the second hinge 6132"'.

The transfer lever 6132 is connected to the first arm 611 at the fulcrum 6132'.

Thereby, when the first arm 611 rotates, the first transfer arm 6131 applies a force to the transfer lever 6132 resulting in a rotation about the fulcrum 6132'.

The first transfer joint 613 comprises a respective transfer plate 6133. The transfer plate 6133 is connected to the transfer lever 6132 at the first hinge 6132".

Therefore, when the transfer lever 6132 rotates as a result of the first transfer arm 6131, the first hinge 6132" moves accordingly, also causing the transfer plate 6133 to rotate.

The transfer plate 6133 is connected to the second arm 612 at a respective fulcrum 6136.

The first transfer joint 613 comprises a respective second transfer arm 6134. The second transfer arm 6134 is connected to the transfer plate 6133 at a corresponding hinge 6134' and to the first dispensing plate 6138 at a corresponding hinge 6134".

The kinematic connections described above cause the following to occur. The rotation of the transfer lever 6132 results in a thrust applied to the transfer plate 6133, which rotates about the fulcrum 6136, resulting in a movement of the hinge 6134' to which the second transfer arm 6134 is connected. The movement of the hinge 6134' results in an axial force on the second transfer arm 6134, which is applied onto the second hinge 6134" and, thus, onto the first dispensing plate 6138. Since the second arm 612 is connected to the first dispensing plate 6138, such a force applied to the second hinge 6134" results in a corresponding rotation of the second arm 612 about the hinge 6136.

The second connecting structure 62 comprises a second connecting plate 64. The second connecting plate 64 is hinged in the lowering hinge C1 on the central skeleton 101. The second connecting plate 64 comprises a second fin 66, which rises from the second connecting plate 64. The second fin 66 is hinged to the piston of the second actuator CP2. Thereby, the sliding of the piston of the second actuator CP2 results in a corresponding rotation of the second fin 66, which thus causes the second connecting plate 64 to rotate.

The second connecting plate 64 comprises a respective elongation hinge 624.

The second connecting structure 62 comprises a respective first arm 621, connected to the second connecting plate 64 at the corresponding elongation hinge 624.

The second connecting structure 62 comprises a respective second arm 622, removably connected to the corresponding first arm 621 at a respective leveling hinge 625.

In fact, the second arm 622 rotates about the leveling hinge 625 with respect to the first arm 621.

The second arm 622 comprises a second idle pin 6237, extending along a direction parallel to the advancement direction A. The second connecting structure 62 comprises a second dispensing plate 6238.

The second dispensing plate 6238 is connected to the second arm 622 by means of the second idle pin 6237 so as to remain effectively perpendicular to the vertical direction V when the second arm 622 moves. The second dispensing plate 6238 comprises a second dispensing pin 6239, arranged on a surface of the second dispensing plate 6238 facing the ground.

The second dispensing pin 6239 extends along the transverse direction T. The second dispensing pin 6239 engages with the second cage 522 of the second dispenser assembly 52. The second dispensing pin 6239 allows an idle rotation of the second cage 522.

Thereby, when the second connecting structure 62 is lowered, the second dispenser assembly 52 nonetheless remains parallel to the vertical direction V, without affecting the effectiveness of the spraying operations. According to a particularly advantageous embodiment, the movement of the second connecting structure 62 between the working position PL2 and the transport position PT2 occurs keeping the vertical height of the second dispensing assembly 52 constant.

In order to obtain such a technical advantage, the second connecting structure 62 comprises a second transfer joint 623. The second transfer joint 623 is configured to transfer a rotation of the first arm 621 into a corresponding rotation of the second arm 622, so that the vertical height of the second dispensing assembly 52 remains constant.

The second transfer joint 623 comprises a respective first transfer arm 6231.

The second transfer joint 623 comprises a respective transfer lever 6232. The transfer lever 6232 comprises a fulcrum 6232', a first hinge 6232" and a second hinge 6232"'. The fulcrum 6232' is arranged at a first end of the transfer lever 6232. The first hinge 6232" is arranged at a second end of the transfer lever 6232, opposite to the first end. The second hinge 6232‴ is arranged between the fulcrum 6232' and the first hinge 6232"'.

The first transfer arm 6231 is connected to the second connecting plate 64 by means of a respective hinge, which allows the relative rotation thereof. The first transfer arm 6231 is connected to the transfer lever 6232 at the second hinge 6232"'.

The transfer lever 6232 is connected to the first arm 621 at the fulcrum 6232'.

Thereby, when the first arm 621 rotates, the first transfer arm 6231 applies a force to the transfer lever 6232 resulting in a rotation about the fulcrum 6232'.

The second transfer joint 623 comprises a respective transfer plate 6233. The transfer plate 6233 is connected to the transfer lever 6232 at the first hinge 6232".

Therefore, when the transfer lever 6232 rotates as a result of the first transfer arm 6231, the first hinge 6232" moves accordingly, also causing the transfer plate 6233 to rotate.

The transfer plate 6233 is connected to the second arm 622 at a respective fulcrum 6236.

The second transfer joint 623 comprises a respective second transfer arm 6234. The second transfer arm 6234 is connected to the transfer plate 6233 at a corresponding hinge 6234' and to the second dispensing plate 6238 at a corresponding hinge 6234".

The kinematic connections described above cause the following to occur. The rotation of the transfer lever 6232 results in a thrust applied to the transfer plate 6233, which rotates about the fulcrum 6236, resulting in a movement of the hinge 6234' to which the second transfer arm 6234 is connected. The movement of the hinge 6234' results in an axial force on the second transfer arm 6234, which is applied to the second hinge 6234" and, therefore, to the second dispensing plate 6238. Since the second arm 622 is connected to the second dispensing plate 6238, such a force applied to the second hinge 6234" results in a corresponding rotation of the second arm 622 about the hinge 6236.

## Claims

1. Apparatus (1) for spraying crops with a treating compound, comprising:
- a frame (10), including a central skeleton (101);
- an interface element (IN), in contact with the ground to allow the apparatus (1) to advance between the crops along an advancement direction (A);
- a tank (2), containing the treating compound;
- a dispensing system (5), configured to dispense the treating compound onto the crops, wherein the dispensing system (5) comprises a dispenser assembly (51), which is spaced from the central skeleton (101) along a transverse direction (T) perpendicular to the advancement direction (A), and which includes at least one dispensing nozzle (511) configured to spray the crops with the treating compound;
- a pressure-head assembly (3), associated with the central skeleton (101) and configured to convey the treating compound from the tank (2) to the dispensing system (5);
- a dispensing duct (4), which conveys the treating compound from the pressure-head assembly (3) to said dispenser assembly (51);
- a connecting structure (6), connected to the central skeleton (101) at the first end thereof and to the dispenser assembly (51) at the second end thereof, said connecting structure (6) extending in a movement plane (PDM) perpendicular to the advancement direction (A),
**characterized in that** said connecting structure (6) is movable with respect to the central skeleton (101) between a first operating position (P11), in which the connecting structure (6) reaches a first height along a vertical direction (V), perpendicular to the transverse direction (T) and to the advancement direction (A), and a second operating position (P12), in which the connecting structure (6) reaches a second height along the vertical direction (V), lower than the first height.

2. The apparatus (1) according to claim 1, wherein the connecting structure (6) is rotatable with respect to the central skeleton (101) about a transverse rotation axis, parallel to the transverse direction (T).

3. The apparatus (1) according to claim 2, wherein the central skeleton (101) extends along the vertical direction (V) between a first end (101A), proximal to a supporting surface on which the apparatus (1) is placed, and a second end (101B), opposite to the first end (101A),
wherein the central skeleton (101) comprises a lowering hinge (C1) including a transverse pin,
wherein the connecting structure (6) is connected to the central skeleton (101) at the lowering hinge (C1).

4. The apparatus (1) according to claim 3, comprising a lowering actuator (CP1), including a fixed portion connected to the central skeleton (101), and a movable portion, removably associated with the fixed portion and connected to the connecting structure (6), wherein the movement of the movable portion generates a lowering torque on the connecting structure (6), causing the connecting structure (6) to rotate about the lowering hinge (C1).

5. The apparatus (1) according to claim 2, 3 or 4, wherein the rotation of the connecting structure (6) defines a lowering angle (AR), defined between the movement plane (PDM) and a vertical plane, perpendicular to the advancement direction (A), wherein the lowering angle is between -90 degrees and 90 degrees.

6. The apparatus (1) according to any one of the preceding claims, wherein the second end of the connecting structure (6) is movable with respect to the central skeleton (101) between a transport position (PT1), in which the second end of the connecting structure (6) is spaced from the central skeleton (101) by a first distance (D21) along the transverse direction (T), and a working position (PL1), in which the second end of the connecting structure (6) is spaced from the central skeleton (101) by a second distance (D11) along the transverse direction (T), greater than the first distance (D21),
wherein the connecting structure (6) is rotatable with respect to the central skeleton (101) about an elongation hinge (614), defining a longitudinal rotation axis, parallel to the advancement direction (A).

7. The apparatus (1) according to claim 6, wherein the connecting structure (6) comprises:
- a first arm (611), extending between a respective first and second end, wherein the first end of the first arm (611) is connected to the central skeleton (101);
- a second arm (612), between a respective first and second end, wherein the first end of the second arm (612) is removably connected to the second end of the first arm (611) and the second end of the second arm (612) is connected to the dispenser assembly (51),
wherein said first and second arms (611, 612) are rotatable with respect to each other about a leveling hinge (615),
- a transfer joint (613), configured to generate a rotation of the second arm (612) about the leveling hinge (615), in response to a rotation of the first arm (611) about the elongation hinge (614), wherein the transfer joint (613) is configured to generate a rotation of the second arm (612) with respect to the first arm (611), which results in a movement of the second end of the second arm (612) along the vertical direction (V) equal to the movement along the vertical direction (V) of the second end of the first arm (611), due to the rotation of the first arm (611) with respect to the central skeleton (101).

8. The apparatus according to claim 7, wherein the first and second arms (611, 612) are of the same length and wherein the rotation angle defined by the rotation of the second arm (512) about the leveling hinge (615) is equal to the rotation angle defined by the rotation of the first arm (611) about the elongation hinge (614).

9. The apparatus (1) according to any one of the preceding claims, wherein the dispensing duct (4) is a flexible duct connected to the connecting structure (6) at one or more constraint points (411).

10. The apparatus (1) according to any one of the preceding claims, wherein the dispenser assembly (51) defines a first dispenser assembly (51), spaced transversely from the central skeleton (101) and arranged on a first transverse side of the central skeleton (101) to spray the crops arranged on said first transverse side,
and wherein the dispensing system (5) comprises an additional dispenser assembly, which defines a second dispenser assembly (52), spaced from the central skeleton (101) along the transverse direction (T) and arranged on a second transverse side, opposite to the first transverse side,
said second dispenser assembly (52) including at least one corresponding dispensing nozzle (521), configured to spray the crops arranged on the second transverse side with the treating compound,
wherein the connecting structure (6) defines a first connecting structure (61) which connects the first dispenser assembly (51) to the central skeleton (101),
and wherein the apparatus (1) comprises an additional connecting structure, defining a second connecting structure (62) which connects the second dispenser assembly (52) to the central skeleton (101),
wherein said second connecting structure (62) is movable with respect to the central skeleton (101) between a respective first operating position (P21), in which the second connecting structure (62) reaches a respective first height along the vertical direction (V), and a respective second operating position (P22), in which the second connecting structure (62) reaches a respective second height along the vertical direction (V), lower than the corresponding first height, wherein the first connecting structure (61) is movable independently of the second connecting structure (62) between the respective first and second operating positions (P11, P12, P21, P22).

11. The apparatus (1) according to any one of the preceding claims, wherein the dispensing system (5) comprises a central dispenser assembly (53), aligned with the central skeleton (101) along the advancement direction (A) and configured to dispense the treating compound outside the apparatus (1).

12. The apparatus (1) according to any one of the preceding claims, wherein the pressure-head member (3) comprises a motor (33) and an impeller (31) driven to rotate about a compression axis by the motor (33), wherein the apparatus (1) comprising a shielding element (33') configured to prevent the newly dispensed treating compound from being sucked back in and including a shielding wall (311'), at least partially perpendicular to the advancement direction (A),
wherein the impeller (33) comprises a suction mouth (310), facing the motor (33),
wherein the shielding wall (311') is interposed between the dispenser assembly (51) and the suction mouth (310) along the advancement direction (A).

13. A method for spraying crops with a treating compound, the method comprising the following steps:
- providing a frame (10), including a central skeleton (101);
- providing an interface element (IN), in contact with the ground to allow the apparatus (1) to advance between the crops along an advancement direction (A);
- storing the treating compound in a tank (2);
- dispensing the treating compound onto the crops through a dispensing system (5) comprising a dispenser assembly (51), which is spaced from the central skeleton (101) along a transverse direction (T) perpendicular to the advancement direction (A), and which includes at least one dispensing nozzle (511) which sprays the crops with the treating compound;
- conveying the treating compound from the tank (2) to the dispensing system (5) through a pressure-head assembly (3) and a dispensing duct (4), which conveys the treating compound from the pressure-head assembly (3) to said dispenser assembly (51);
- providing a connecting structure (6, 61), connected to the central skeleton (101) at the first end thereof and to the dispenser assembly (51) at a second end thereof, said connecting structure (6, 61) extending in a movement plane (PDM), perpendicular to the advancement direction (A), **characterized in that** the method comprises a step of moving said connecting structure (6, 61) with respect to the central skeleton between a first operating position (P11), in which the connecting structure (6, 61) reaches a first height along a vertical direction (V), perpendicular to the transverse direction (T) and to the advancement direction (A), and a second operating position (P21), in which the connecting structure (6, 61) reaches a second height along the vertical direction (V), lower than the first height.

14. The method according to claim 13, wherein, at the movement step, the connecting structure (6, 61) rotates with respect to the central skeleton (101) about a transverse rotation axis, parallel to the transverse direction (T).

15. The method according to claim 13 or 14, comprising a step of moving the second end of the connecting structure (6, 61) with respect to the central skeleton (101) between a transport position (PT1), in which the second end of the connecting structure (6, 61) is spaced from the central skeleton (101) by a first distance (D21) along the transverse direction (T), and a working position (PL1), in which the second end of the connecting structure (6, 61) is spaced from the central skeleton (101) by a second distance (D11) along the transverse direction (T), greater than the first distance (D21), wherein, at the step of moving the second end of the connecting structure (6, 61), the connecting structure (6, 61) rotates with respect to the central skeleton (101) about an elongation hinge (615), defining a longitudinal rotation axis, parallel to the advancement direction (A).
